# EUROPÄISCHE PATENTANMELDUNG

(11) **EP 4 067 721 A1**
(43) Veröffentlichungstag der Anmeldung: **05.10.2022**
(21) Anmeldenummer: 22168181.0
(22) Anmeldetag: 20.08.2020
(51) Int. Cl.: F16L 33/24, F16L 33/30

(54) **ANSCHLUSSKUPPLUNG**

(30) Priorität: 06.09.2019 DE 202019104932 U
(62) Teilanmeldung aus: 20761775.4
(71) Anmelder: Neoperl GmbH, 79379 Müllheim (DE)
(72) Erfinder: Oechsle, Daniel, 79379 Müllheim (DE); Reinhardt, Holger, 79232 March/Buchheim (DE); Höppner, Jürgen, 79379 Müllheim (DE); Kury, Werner, 79379 Müllheim (DE)
(74) Vertreter: Mertzlufft-Paufler, Cornelius

(57) **Zusammenfassung**

Bei einer Anschlusskupplung wird vorgeschlagen, an einem Schlauchnippel (3) eine Rippenstruktur (4) auszubilden, die wenigstens eine erste Rippe (5) aufweist, wobei die wenigstens erste Rippe (5) sich von einem Rippenanfang (6) bis zu einem zu diesem axial beabstandeten Rippenende (7) kontinuierlich erstreckt und sich über einen Umfangsabschnitt von mehr als 180°, vorzugsweise mehr als 270°, besonders bevorzugt über mehr als 360° oder wenigstens einmal, um den Schlauchnippel (3) windet (vgl. Fig. 1).

## Beschreibung

Die Erfindung betrifft eine Anschlusskupplung oder Anschlussverbindung für einen Schlauch, mit einem Schlauchnippel, an welchem eine Rippenstruktur mit wenigstens einer ersten Rippe ausgebildet ist.

Derartige Anschlusskupplungen sind bekannt und werden beispielsweise dazu verwendet, einen Schlauch an einer Armatur oder einem weiteren Schlauch zu befestigen. Hierzu wird der Schlauchnippel in den Schlauch gesteckt und von außen gepresst oder gecrimpt, um einen kraft- oder formschlüssigen Halt des Schlauches zu ermöglichen. Hierzu kann auf dem Schlauchnippel eine Rippenstruktur ausgebildet sein, welche den Formschluss erhöht. Es ist wünschenswert, wenn die Anschlusskupplung in dem Schlauch drehfest gehalten wird, damit nicht im Gebrauch durch ein Rutschen des Schlauches auf dem Schlauchnippel Undichtigkeiten entstehen.

Der Erfindung liegt die Aufgabe zu Grunde, eine einfach fertigbare Anschlusskupplung zu schaffen, die einen verbesserten Halt des Schlauches auf dem Schlauchnippel mit erhöhter Abdichtung erreicht.

Zur Lösung der genannten Aufgabe sind erfindungsgemäß die Merkmale des Anspruchs 1 vorgesehen. Insbesondere wird somit erfindungsgemäß zur Lösung der genannten Aufgabe bei einer Anschlusskupplung der eingangs beschriebenen Art vorgeschlagen, dass die wenigstens eine erste Rippe den Schlauchnippel über mehr als 180° umlaufend, vorzugsweise über mehr als 270° umlaufend, besonders bevorzugt über mehr als 360° umlaufend oder wenigstens einmal umlaufend, ausgebildet ist und dass ein Rippenanfang der wenigstens einen ersten Rippe von einem Rippenende der wenigstens einen ersten Rippe axial beabstandet ist. Die Erfindung hat erkannt, dass mit einer derartigen Ausgestaltung der wenigstens einen Rippe eine ausreichende Abweichung von einer Drehsymmetrie des Schlauchnippels erreichbar ist, so dass eine Verdrehsicherung erreichbar ist.

Bei einer Ausgestaltung der Erfindung kann vorgesehen sein, dass die wenigstens eine erste Rippe zumindest abschnittsweise schräg zu einer Umfangsrichtung verläuft. Somit ist eine Kraftkomponente an der wenigstens einen ersten Rippe entwickelbar, welche zu einer Verdrehsicherung des Schlauches beiträgt oder eine solche bewirkt.

Bei einer Ausgestaltung der Erfindung kann vorgesehen sein, dass die wenigstens eine erste Rippe zumindest abschnittsweise schräg zu einer durch die Rippe verlaufenden Axialrichtung verläuft. Somit ist eine Kraftkomponente an der wenigstens einen ersten Rippe entwickelbar, welche zu einer axialen Abzugssicherung des Schlauches beiträgt oder eine solche bewirkt.

Bei einer Ausgestaltung der Erfindung kann vorgesehen sein, dass die wenigstens eine erste Rippe wenigstens einen Gewindegang bildet. Es hat sich herausgestellt, dass diese Form besonders günstig für eine Erreichung einer guten axialen Haltekraft und einer ausreichenden Verdrehsicherung ist.

Bei einer Ausgestaltung der Erfindung kann vorgesehen sein, dass die Rippenstruktur wenigstens zwei Gewindegänge hat, insbesondere ein mehrgängiges Gewinde aufweist. Es sind somit steilere Gewindegänge realisierbar, wodurch eine Verdrehsicherung verstärkt ist.

Flachere Gewindegänge haben den Vorteil, dass ein Sickerpfad, der sich entlang eines Gewindeganges ausbilden kann, sehr lang wird und daher von sich aus dichtet.

Bei einer Ausgestaltung der Erfindung kann vorgesehen sein, dass die Rippenstruktur wenigstens eine zweite Rippe hat, welche die wenigstens eine erste Rippe kreuzt. Die zweite Rippe kann beispielsweise eine schräg zu einer Umfangsrichtung eines Grundkörpers verlaufende, insbesondere gegenläufig geschraubte, Rippe oder eine entlang einer Umfangslinie eines Grundkörpers umlaufende Rippe sein.

Bei einer Ausgestaltung der Erfindung kann vorgesehen sein, dass die Rippenstruktur wenigstens eine weitere Rippe hat, welche einen gegenüber der wenigstens einen ersten Rippe gegenläufigen Umlauf aufweist. Somit ist auf einfache Weise eine Verdrehsicherung in zwei gegenläufigen Drehsinnen bereitstellbar.

Alternativ oder zuzüglich können zur Lösung der genannten Aufgabe die Merkmale des zweiten unabhängigen Anspruchs vorgesehen sein. Insbesondere kann somit alternativ oder zusätzlich zur Lösung der Aufgabe bei einer Anschlusskupplung der eingangs beschriebenen Art, wobei die Rippenstruktur an einem Grundkörper ausgebildet ist, vorgesehen sein, dass der Grundkörper in einem ersten Axialabschnitt der Rippenstruktur einen größeren Außenumfang aufweist als in einem zweiten Axialabschnitt der Rippenstruktur. Somit sind unterschiedliche Axialabschnitte definierbar, in denen ein aufgesteckter Schlauch unterschiedlich stark verpresst wird. Dies kann günstig sein, um zwischen einer hohen Abdichtung und einer großen axialen Haltekraft zu vermitteln.

Bei einer Ausgestaltung der Erfindung kann vorgesehen sein, dass der Grundkörper in einem dritten Axialabschnitt der Rippenstruktur einen kleineren Außenumfang aufweist als in dem ersten Axialabschnitt, wobei der erste Axialabschnitt zwischen dem zweiten Axialabschnitt und dem dritten Axialabschnitt angeordnet ist. Es ist somit ein Axialabschnitt mit maximalem Außenumfang des Grundkörpers bereitstellbar. Dies kann ein besonders dichtes Abdichten der Verbindung zwischen einem Schlauch und dem Schlauchnippel begünstigen.

Bei einer Ausgestaltung der Erfindung kann vorgesehen sein, dass der Grundkörper verjüngend ausgebildet ist. Dies ist beispielsweise verwendbar, um ein Einstecken des Schlauchnippels in den Schlauch zu erleichtern. Insbesondere kann vorgesehen sein, dass der Grundkörper konusförmig, insbesondere in einer Aufsteckrichtung aufgeweitet, ausgebildet ist.

Bei einer Ausgestaltung der Erfindung kann vorgesehen sein, dass der Grundkörper bauchig ausgebildet ist. Somit kann im Bereich der Rippenstruktur, insbesondere axial beabstandet zu axialen Endbereichen der Rippenstruktur, ein Umfangsmaximum ausgebildet sein. Beispielsweise kann vorgesehen sein, dass der Grundkörper im Bereich der Rippenstruktur doppelkonusförmig ausgebildet ist.

Bei einer Ausgestaltung der Erfindung kann vorgesehen sein, dass eine Rippenhöhe entlang der wenigstens einen ersten Rippe konstant ist. Von Vorteil ist dabei, dass in allen Rippenabschnitten gleiche Haltekräfte ausbildbar sind. Insbesondere kann vorgesehen sein, dass die Rippenhöhe über die gesamte Rippenstruktur konstant ist. Somit sind alle Rippenabschnitte gleichermaßen für eine Haltekraft nutzbar.

Alternativ oder zuzüglich können zur Lösung der genannten Aufgabe die Merkmale des dritten unabhängigen Anspruchs vorgesehen sein. Insbesondere kann somit alternativ oder zusätzlich zur Lösung der Aufgabe bei einer Anschlusskupplung der eingangs beschriebenen Art, wobei die Rippenstruktur an einem Grundkörper ausgebildet ist, oder bei einer Anschlusskupplung gemäß einer der vorangehenden Ausgestaltungen vorgesehen sein, dass die Rippenstruktur eine Einhüllende beschreibt und dass ein Abstand zwischen dem Grundkörper und der Einhüllenden axial variiert. Somit ist beispielsweise eine einfach gestaltete Crimphülse verwendbar, um in unterschiedlichen Axialabschnitten eines komplex gestalteten Grundkörpers ein unterschiedlich tiefes Eindringen der Rippenstruktur in einen aufgeschobenen Schlauch zu erreichen.

Bei einer Ausgestaltung der Erfindung kann vorgesehen sein, dass die Einhüllende den Grundkörper in einem weiteren Axialabschnitt schneidet. Somit sind Axialabschnitte bereitstellbar, die im Wesentlichen oder vollständig frei von Rippen ausgebildet sind.

Bei einer Ausgestaltung der Erfindung kann vorgesehen sein, dass die Einhüllende ein Zylinder ist. Somit sind beispielsweise zylindrische oder nur leicht von einer Zylinderform abweichende Crimphülsen verwendbar.

Bei einer Ausgestaltung der Erfindung kann vorgesehen sein, dass die wenigstens eine erste Rippe in wenigstens einem Rippenabschnitt einen Verlauf mit einer axialen Auslenkung aufweist. Hierdurch ist eine zusätzliche Verdrehsicherung bewirkbar.

Bei einer Ausgestaltung der Erfindung kann vorgesehen sein, dass die wenigstens eine erste Rippe in wenigstens einem Rippenabschnitt, insbesondere beabstandet zum Rippenanfang und/oder zum Rippenende, ein Maximum einer Rippenhöhe annimmt. Es sind somit Anformungen an der ersten Rippe ausbildbar, die eine zusätzliche Verdrehsicherung bewirken. Diese Anformungen können zusätzlich oder alternativ an den anderen beschriebenen Rippen ausgebildet sein. Bevorzugt sind diese Anformungen auf einen Umfangsabschnitt begrenzt, der kleiner als ein Viertel oder kleiner als ein Achtel des Umfangs ist. Es sind somit nasenförmige Anformungen ausbildbar. Die Anformungen können beispielsweise eine Vergrößerung der Rippenhöhe um 20% bis 75% ergeben.

Bei einer Ausgestaltung der Erfindung kann vorgesehen sein, dass an einem Axialende eine vorzugsweise konische Aufsteckhilfe ausgebildet ist. Insbesondere kann hierbei vorgesehen sein, dass sich die Rippenstruktur axial in die Aufsteckhilfe erstreckt oder dass die Aufsteckhilfe rippenfrei ausgebildet ist. Somit kann die Rippenstruktur axial möglichst lang ausgebildet oder ein Aufstecken eines Schlauches auf die Rippenstruktur erleichtert werden.

Bei einer Ausgestaltung der Erfindung kann vorgesehen sein, dass eine Aufsteckhilfe, beispielsweise die bereits erwähnte Aufsteckhilfe, einen gegenüber einem die Rippenstruktur tragenden Grundkörper, beispielsweise dem bereits erwähnten Grundkörper, einen vergrößerten Außenumfang aufweist. Von Vorteil ist dabei, dass der vergrößerte Außenumfang eine zusätzliche axiale Sicherung bereitstellt, die gemeinsam mit dem schräg verlaufenden Rippenabschnitt eine Verdrehsicherung sowie eine Sicherung gegen auf den Schlauch aufgebrachte axiale Zugkräfte bewirkt oder verstärkt.

Eine besonders kostengünstige Herstellung ist möglich, wenn der Schlauchnippel oder die gesamte Anschlusskupplung aus einem Kunststoffmaterial, insbesondere in Spritzguss, hergestellt ist.

Die Erfindung wird nun anhand von Ausführungsbeispielen näher beschrieben, ist jedoch nicht auf dieser Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der aus.

Es zeigt:
- Fig. 1: eine erfindungsgemäße Anschlusskupplung mit einer Rippenstruktur in Form eines Regelgewindes auf einem zylindrischen Grundkörper,
- Fig. 2: eine Schnittdarstellung entlang der Schnittebene aus Figur 1,
- Fig. 3: eine weitere erfindungsgemäße Anschlusskupplung,
- Fig. 4: eine weitere erfindungsgemäße Anschlusskupplung mit einer Rippenstruktur in Form eines zweigängigen Gewindes,
- Fig. 5: eine weitere erfindungsgemäße Anschlusskupplung mit einer axialen Auslenkung der Rippe,
- Fig. 6: eine weitere erfindungsgemäße Anschlusskupplung mit radial erstreckten Anformungen an der Rippe,
- Fig. 7: eine weitere erfindungsgemäße Anschlusskupplung mit zusätzlichen kreuzenden, entlang einer Umfangslinie oder in Umfangsrichtung umlaufenden Rippen,
- Fig. 8: eine weitere erfindungsgemäße Anschlusskupplung mit einer Rippenstruktur in Form eines unterbrochenen Gewindeganges und zusätzlichen kreuzenden, entlang einer Umfangslinie umlaufenden Rippen,
- Fig. 9: eine weitere erfindungsgemäße Anschlusskupplung mit einer Rippenstruktur in Form zweier gegenläufig umlaufender, sich kreuzender Gewindegängen,
- Fig. 10: eine weitere erfindungsgemäße Anschlusskupplung mit einer Rippenstruktur mit zwei gegenläufig umlaufenden, axial voneinander beabstandeten Gewindegängen und zusätzlichen kreuzenden, entlang einer Umfangslinie umlaufenden Rippen,
- Fig. 11: eine weitere erfindungsgemäße Anschlusskupplung mit konischem Grundkörper,
- Fig. 12: eine Schnittdarstellung entlang der Schnittebene aus Figur 11,
- Fig. 13: eine weitere erfindungsgemäße Anschlusskupplung mit konischem Grundkörper,
- Fig. 14: eine weitere erfindungsgemäße Anschlusskupplung mit bauchigem Grundkörper,
- Fig. 15: eine Schnittdarstellung entlang der Schnittebene aus Figur 14,
- Fig. 16: eine weitere erfindungsgemäße Anschlusskupplung mit bauchigem Grundkörper und Grobgewinde,
- Fig. 17: eine weitere erfindungsgemäße Anschlusskupplung mit bauchigem Grundkörper, gegenläufigen Rippen und entlang einer Umfangsrichtung umlaufenden Rippen,
- Fig. 18: eine weitere erfindungsgemäße Anschlusskupplung mit bauchigem Grundkörper und
- Fig. 19: eine Schnittdarstellung entlang der Schnittebene aus Figur 18.

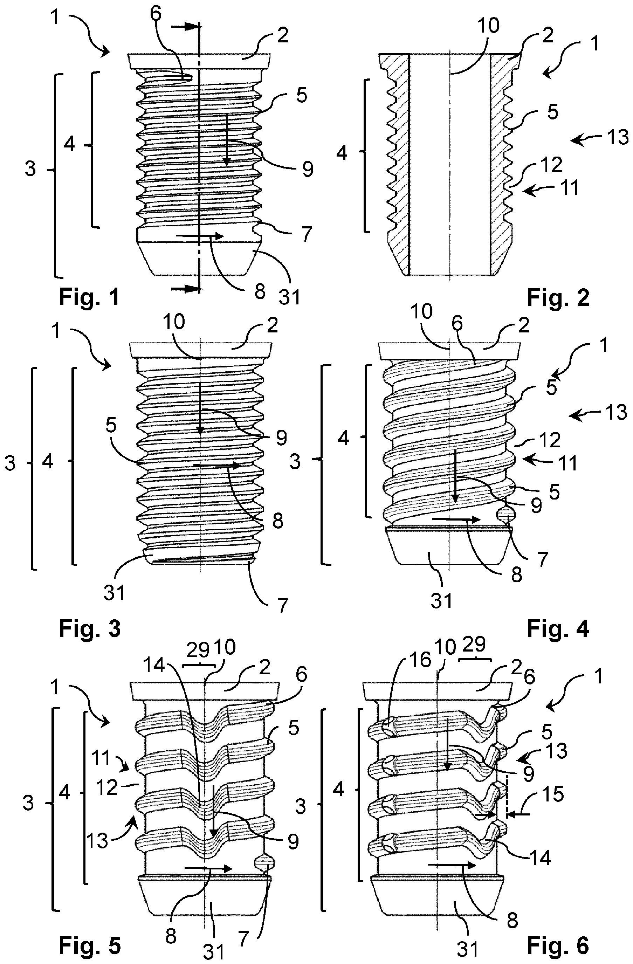

Die Fig. 1 und 2 zeigen eine im Ganzen mit 1 bezeichnete erfindungsgemäße Anschlusskupplung für einen nicht weiter dargestellten Schlauch.

Die Anschlusskupplung hat ein Anschlussstück 2, an welchem in an sich bekannter Weise eine Überwurfmutter angeordnet sein kann oder eine andere Funktionseinheit, mit der ein Schlauch mit einer Armatur oder mit einem weiteren Schlauch oder mit einer sonstigen Vorrichtung zur Wasserführung verbindbar ist.

An das Anschlussstück 2 schließt sich ein Schlauchnippel 3 an, auf welches der erwähnte Schlauch in an sich bekannter Weise aufgesteckt wird.

Außenseitig an dem Schlauchnippel 3 ist eine Rippenstruktur 4 ausgebildet, auf welcher der aufgesteckte Schlauch aufliegt.

Die Rippenstruktur 4 dient dazu, zu verhindern, dass der Schlauch von dem Schlauchnippel 3 unbeabsichtigt abgezogen wird. Hierzu kann beispielsweise die Rippenstruktur 4 in das Schlauchmaterial durch eine Eigenelastizität des Schlauchmaterials, mit welcher sich der Schlauch auf die Rippenstruktur 4 legt, oder mit zusätzlichen Schellen oder Crimphülsen, die über den aufgesteckten Schlauch gelegt sind, eingepresst werden. Somit kann eine radiale Verpressung des Schlauchmaterials zwischen Schelle oder Crimphülse einerseits und Schlauchnippel andererseits erzeugt werden.

Die Rippenstruktur 4 weist wenigstens eine erste Rippe 5 auf, die von einem Rippenanfang 6 mehrmals um den Schlauchnippel 3 bis zu einem Rippenende 7 verläuft.

Rippenanfang 6 und Rippenende 7 sind hierbei axial um die axiale Erstreckung der Rippenstruktur 4 voneinander beabstandet.

Dieser axiale Abstand und der gleichförmige Umlauf um den Schlauchnippel 3 haben zur Folge, dass die erste Rippe 5 sowohl zu einer Umfangsrichtung 8 als auch zu einer Axialrichtung 9 schräg verläuft, also jeweils einen nichtverschwindenden Winkel von weniger als 90° mit der Umfangsrichtung 8 beziehungsweise der Axialrichtung 9 einschließt. Die Axialrichtung 9 ergibt sich hierbei als eine Parallele zur Längsmittelachse 10 des Schlauchnippels 3, die durch die erste Rippe 5 an dem jeweils betrachteten Punkt verläuft.

Die erste Rippe 5 bildet somit einen Gewindegang 11 mit einer neben der ersten Rippe 5 verlaufenden Gewindenut 12.

Mit anderen Worten bilden die Gewindenut 12 und die erste Rippe 5 einen umlaufenden Gewindegang 11 eines Gewindes 13.

Fig. 3 zeigt eine weitere erfindungsgemäße Anschlusskupplung 1. Konstruktiv und/oder funktionell zu dem Ausführungsbeispiel nach Fig. 1 und Fig. 2 gleichartige oder identische Bauteile und Funktionseinheiten sind mit denselben Bezugszeichen bezeichnet und nicht gesondert beschrieben. Die Ausführungen zu den Fig. 1 und 2 gelten daher zu Fig. 3 entsprechend.

Die Anschlusskupplung 1 gemäß Fig. 3 unterscheidet sich von den Fig. 1 und 2 dadurch, dass sich die erste Rippe 5 über die gesamte axiale Länge des Schlauchnippels 3 erstreckt.

In Fig. 3 ist der Rippenanfang 6 auf der Rückseite des Schlauchnippels 3 angeordnet und daher nicht sichtbar.

Fig. 4 zeigt ein weiteres erfindungsgemäßes Ausführungsbeispiel einer Anschlusskupplung 1. Zu den Ausführungsbeispielen nach den Fig. 1 bis 3 gleichartige oder identische Bauteile und Funktionseinheiten sind mit denselben Bezugszeichen bezeichnet und nicht noch einmal gesondert beschrieben. Die Ausführungen zu den Fig. 1 bis 3 gelten daher zu Fig. 4 entsprechend.

Das Ausführungsbeispiel gemäß Fig. 4 unterscheidet sich von den vorangehenden Ausführungsbeispielen dadurch, dass die erste Rippe 5 ein Gewinde 13 in Form eines Grobgewindes bildet.

Dieses Gewinde 13 ist als zweigängiges Gewinde ausgebildet, so dass zwei erste Rippen 5 in der Rippenstruktur 4 vorhanden sind, die mit gleichförmigem Abstand zueinander um den Schlauchnippel 3 laufen.

Fig. 5 zeigt eine weitere erfindungsgemäße Anschlusskupplung. Funktionell und/oder konstruktiv zu den vorangegangenen Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 4 gelten daher zu Fig. 5 entsprechend.

Das Gewinde 13 ist in Fig. 5 als eingängiges Grobgewinde ausgebildet. Als zusätzliche Verdrehsicherung weist die erste Rippe 5 mehrere Auslenkungen 14 auf, die in der Axialrichtung 9 ausgerichtet sind.

In Fig. 5 sind beispielhaft vier Auslenkungen 14 in demselben Umfangsabschnitt axial versetzt zueinander angeordnet. Bei weiteren Ausführungsbeispielen können die Auslenkungen 14 auch in Umfangsrichtung gegeneinander versetzt angeordnet sein.

Fig. 6 zeigt eine weitere erfindungsgemäße Anschlusskupplung 1. Funktionell und/oder konstruktiv zu den vorangegangenen Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 5 gelten daher zu Fig. 6 entsprechend.

Das Ausführungsbeispiel nach Fig. 6 unterscheidet sich von den vorangehenden Ausführungsbeispielen dadurch, dass die erste Rippe 5 entlang ihres Verlaufs eine variierende Rippenhöhe 15 aufweist. Hierdurch sind Anformungen 16 ausgebildet, an denen das Rippenmaterial der ersten Rippe 5 von dem Schlauchnippel 3 weiter abragt als in der Nachbarschaft dieser Anformungen 16. Die Anformungen 16 sind jeweils lokal konzentriert und erstrecken sich über weniger als ein Achtel des Umfangs.

Dies schafft eine zusätzliche Verdrehsicherung für den Schlauch auf der Rippenstruktur 4.

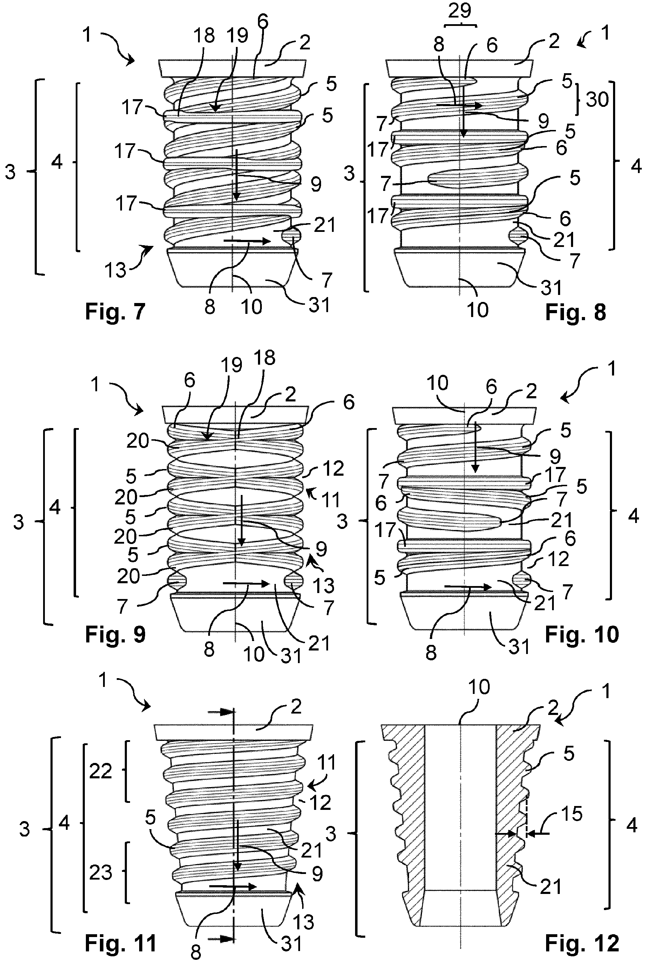

Fig. 7 zeigt eine weitere erfindungsgemäße Anschlusskupplung 1. Funktionell und/oder konstruktiv zu den vorangehenden Ausführungsbeispielen gleichartige oder identische Bauteile und Funktionseinheiten sind wieder mit denselben Bezugszeichen bezeichnet und nicht noch einmal gesondert beschrieben. Die Ausführungen zu den Fig. 1 bis 6 gelten daher zu der Fig. 7 entsprechend.

Das Ausführungsbeispiel gemäß Fig. 7 weist analog zu Fig. 4 zwei doppelhelixartig um den Schlauchnippel 3 umlaufende erste Rippen 5 auf, die ein zweigängiges Gewinde 13 bilden.

Zusätzlich weist die Anschlusskupplung 1 nach Fig. 7 drei zweite Rippen 17 auf, die als geschlossene Rippen der Umfangsrichtung 8 folgen.

Diese zweiten Rippen 17 kreuzen somit die ersten Rippen 5 an Kreuzungspunkten 18. An diesen Kreuzungspunkten 18 bildet sich somit ein Zwickel 19 zwischen der jeweiligen ersten Rippe 5 und der zweiten Rippe 17 aus.

In Fig. 7 ist das Rippenende 7 auf der Rückseite des Schlauchnippels 3 angeordnet und daher nicht sichtbar.

Fig. 8 zeigt eine weitere erfindungsgemäße Anschlusskupplung 1. Wieder sind konstruktiv und/oder funktionell zu den vorangehenden Ausführungsbeispielen gleichartige oder identische Bauteile und Funktionseinheiten mit denselben Bezugszeichen bezeichnet und nicht noch einmal gesondert beschrieben. Die Ausführungen zu den Fig. 1 bis 7 gelten daher zu Fig. 8 entsprechend.

Das Ausführungsbeispiel gemäß Fig. 8 unterscheidet sich von den vorangehenden Ausführungsbeispielen dadurch, dass drei erste Rippen 5 axial nebeneinander ausgebildet sind. Diese ersten Rippen 5 sind zueinander gleichlaufend ausgeführt. Jeweils benachbarte erste Rippen 5 werden durch in Umfangsrichtung ausgerichtete zweite Rippen 17 voneinander getrennt.

In Fig. 8 ist noch erkennbar, dass die erste Rippe 5 zumindest in dem Rippenabschnitt 29 schräg zu der Umfangsrichtung 8 verläuft und zumindest in dem Rippenabschnitt 30 schräg zu der Axialrichtung 9.

Fig. 9 zeigt ein weiteres erfindungsgemäßes Ausführungsbeispiel. Konstruktiv und/oder funktionell gleichartige oder identische Bauteile und Funktionseinheiten sind wieder mit denselben Bezugszeichen bezeichnet. Die Ausführungen zu den Fig. 1 bis 8 gelten daher zu Fig. 9 entsprechend.

Das Ausführungsbeispiel nach Fig. 9 unterscheidet sich von den vorangehenden Ausführungsbeispielen dadurch, dass zusätzlich zu der ersten Rippe 5 eine weitere Rippe 20 ausgebildet ist. Diese weitere Rippe 20 läuft gegenläufig zu der ersten Rippe 5 um den Schlauchnippel 3 herum.

Hierdurch ergibt sich eine Vielzahl von Kreuzungspunkten 18.

Fig. 10 zeigt ein weiteres erfindungsgemäßes Ausführungsbeispiel einer Anschlusskupplung 1. Zu den vorangegangenen Ausführungsbeispielen konstruktiv und/oder funktionell gleichartige oder identische Bauteile und Funktionseinheiten sind wieder mit denselben Bezugszeichen bezeichnet und nicht noch einmal gesondert beschrieben. Die Ausführungen zu den Fig. 1 bis 9 gelten daher zu Fig. 10 entsprechend.

Das Ausführungsbeispiel nach Fig. 10 hat eine Rippenstruktur 4, die drei axial nebeneinander angeordnete erste Rippen 5 aufweist. Diese ersten Rippen 5 werden jeweils durch zweite Rippen 17, die in Umfangsrichtung verlaufen, voneinander getrennt.

Bei dem Ausführungsbeispiel nach Fig. 10 ist im Gegensatz zu dem Ausführungsbeispiel nach Fig. 8 die mittlere erste Rippe 5 gegenläufig zu den benachbarten ersten Rippen 5 ausgebildet.

Bei den Ausführungsbeispielen nach den Fig. 1 bis 10 ist die Rippenstruktur 4 jeweils an einem Grundkörper 21 ausgebildet, der die Form eines Zylinders hat.

Die Fig. 11 und 12 zeigen eine weitere erfindungsgemäße Anschlusskupplung 1. Konstruktiv und/oder funktionell zu den vorangehenden Ausführungsbeispielen gleichartige oder identische Bauteile und Funktionseinheiten sind wieder mit denselben Bezugszeichen bezeichnet und nicht noch einmal gesondert beschrieben. Die Ausführungen zu den Fig. 1 bis 10 gelten daher zu den Fig. 11 und 12 entsprechend.

Das Ausführungsbeispiel gemäß den Fig. 11 und 12 unterscheidet sich von der vorangehenden Ausführungsbeispielen dadurch, dass der Grundkörper 21 nicht zylindrisch ausgebildet ist, sondern in einem ersten Axialabschnitt 22 einen größeren Außenumfang aufweist als in einem zweiten Axialabschnitt 23.

Hierdurch ergibt sich eine verjüngende Form des Grundkörpers 21, die entgegen der Aufsteckrichtung für den Schlauch ausgerichtet ist, so dass sich der Schlauch beim Aufstecken aufweitet.

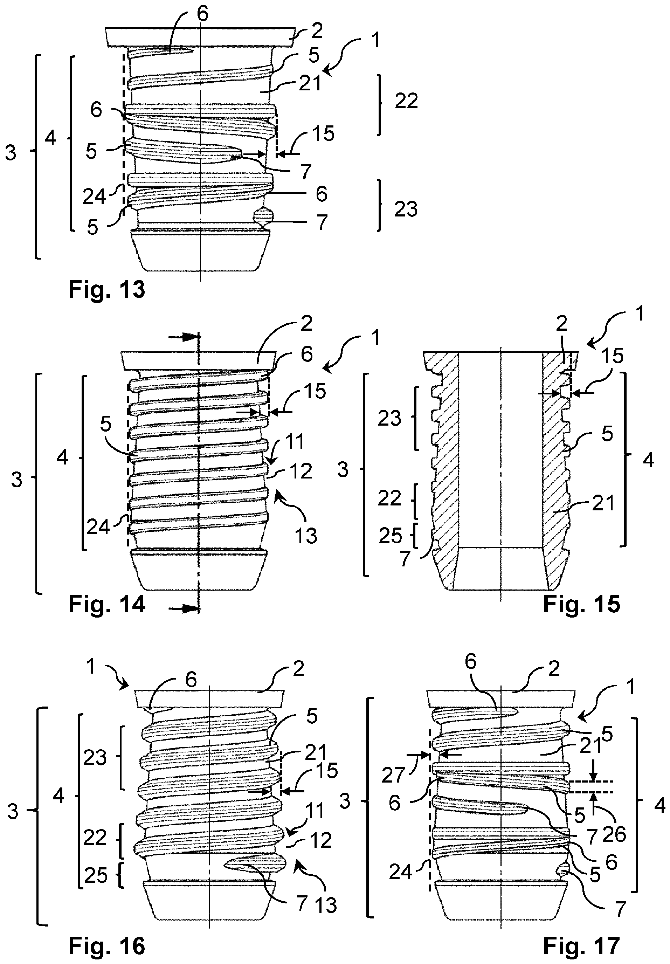

Bei dem Ausführungsbeispiel gemäß den Fig. 11 und 12 weist die erste Rippe 5 eine gleichförmige Rippenhöhe 15 auf. Fig. 13 zeigt ein weiteres erfindungsgemäßes Ausführungsbeispiel einer Anschlusskupplung 1. Wieder sind funktionell und/oder konstruktiv gleich zu den vorangehenden Ausführungsbeispielen gleichartige oder identische Bauteile und Funktionseinheiten mit denselben Bezugszeichen bezeichnet und nicht gesondert beschrieben. Die Erläuterungen zu den Fig. 1 bis 12 gelten daher zu Fig. 13 entsprechend.

Das Ausführungsbeispiel nach Fig. 13 zeigt beispielhaft eine Kombination der Rippenstruktur 4 aus Fig. 10 mit dem konischen Grundkörper 21 aus Fig. 11.

Hierbei ist die Rippenhöhe 15 in dem ersten Axialabschnitt 22 geringer ausgebildet als in dem zweiten Axialabschnitt 23.

Dies ermöglicht es, dass eine Einhüllende 24 der Rippenstruktur 4 eine Zylinderform hat.

Die Fig. 14 und 15 zeigen ein weiteres erfindungsgemäßes Ausführungsbeispiel einer Anschlusskupplung 1. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 13 gelten daher zu den Fig. 14 und 15 entsprechend.

Das Ausführungsbeispiel gemäß den Fig. 14 und 15 unterscheidet sich von den vorangehenden Ausführungsbeispielen dadurch, dass ein dritter Axialabschnitt 25 ausgebildet ist, in welchem der Grundkörper 21 einen geringeren Außenumfang aufweist, als in dem ersten Axialabschnitt 22, wobei der erste Axialabschnitt 22 zwischen dem zweiten Axialabschnitt 23 und dem dritten Axialabschnitt 25 angeordnet ist.

Hierdurch hat der Grundkörper 21 eine bauchige Grundform, die in etwa einem Doppelkonus entspricht.

Bei dem Ausführungsbeispiel gemäß Fig. 14 hat die erste Rippe 5 eine entlang ihres Verlaufs variierende Rippenhöhe 15, so dass die Einhüllende 24 der Rippenstruktur 4 wieder eine Zylinderform aufweist.

Fig. 16 zeigt ein weiteres erfindungsgemäßes Ausführungsbeispiel. Konstruktiv und/oder funktionell zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Fig. 1 bis 15 gelten daher zu Fig. 16 entsprechend.

Das Ausführungsbeispiel nach Fig. 16 unterscheidet sich dadurch, dass der doppelkonusförmige Grundkörper 21 eine Rippenstruktur 4 trägt, die aus einer ersten Rippe 5 mit gleichbleibender Rippenhöhe 15 gebildet ist.

Fig. 17 zeigt ein weiteres erfindungsgemäßes Ausführungsbeispiel, bei dem konstruktiv und/oder funktionell zu den vorangehenden Ausführungsbeispielen gleichartige oder identische Bauteile und Funktionseinheiten mit denselben Bezugszeichen bezeichnet und nicht noch einmal gesondert beschrieben sind. Die Ausführungen zu den Fig. 1 bis 16 gelten daher zu Fig. 17 entsprechend.

Fig. 17 stellt eine Kombination der Fig. 13 und 16 dar, wobei die Rippenstruktur 4 ähnlich zu Fig. 13 und der Grundkörper 21 ähnlich zu Fig. 16 ausgeführt ist.

Bei den Ausführungsbeispielen gemäß Fig. 13 und Fig. 17 ist zusätzlich noch vorgesehen, dass die Rippenbreite 26 der ersten Rippen 5 unterschiedlich groß gewählt ist.

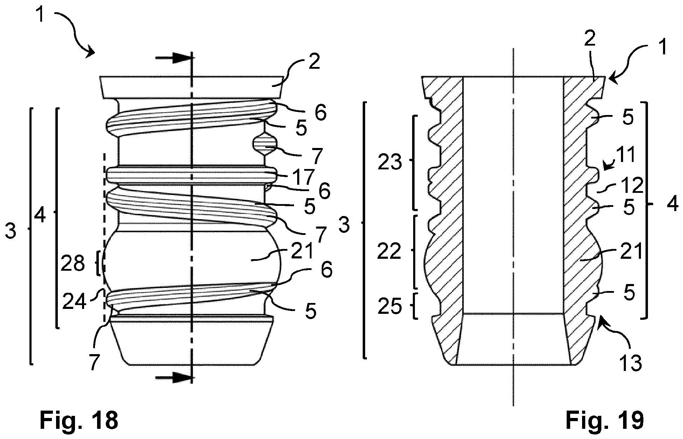

Die Fig. 18 und 19 zeigen ein weiteres erfindungsgemäßes Ausführungsbeispiel einer Anschlusskupplung 1. Funktionell und/oder konstruktiv zu den vorangehenden Ausführungsbeispielen identische oder gleichartige Bauteile und Funktionseinheiten sind mit denselben Bezugszeichen bezeichnet und nicht noch einmal gesondert beschrieben. Die Ausführungen zu den Fig. 1 bis 17 gelten daher zu Fig. 18 entsprechend.

Das Ausführungsbeispiel gemäß den Fig. 18 und 19 weist einen bauchigen Grundkörper 21 auf, wobei diese bauchige Grundform aus einem Zylinder, welcher den zweiten Axialabschnitt 23 und den dritten Axialabschnitt 25 definiert und einer Kugel, welche den ersten Axialabschnitt 22 definiert, zusammengesetzt ist.

In Fig. 18 ist noch ersichtlich, dass die Einhüllende 24 den Grundkörper 21 in einem weiteren Axialabschnitt 28 schneidet, so dass der Grundkörper 21 in diesem weiteren Axialabschnitt 28 über die Einhüllende 24 der Rippenstruktur 4 nach außen hinaussteht. In diesem Axialabschnitt 28 ist der Grundkörper somit rippenfrei.

Am freien Ende des Schlauchnippels 3 ist eine an sich bekannte konische Aufsteckhilfe 31 ausgebildet. In dem Ausführungsbeispiel gemäß Fig. 3 erstreckt sich die erste Rippe 5 in den Axialbereich der Aufsteckhilfe 31, während in den übrigen Ausführungsbeispielen die Aufsteckhilfe 31 rippenfrei ausgebildet ist.

Die Aufsteckhilfe 31 hat einen größeren maximalen Außenumfang als der Grundkörper 21 und bildet somit einen Anschlag für eine axiale Verschiebung des aufgesteckten Schlauches, wenn sich der Schlauchnippel 3 aus dem Schlauch herausschrauben und/oder herausziehen will.

Bei weiteren Ausführungsbeispielen sind einzelne Kombinationen der Merkmale der vorangehenden Ausführungsbeispiele miteinander kombiniert, beispielsweise eine Rippenstruktur aus einem Ausführungsbeispiel mit einem Grundkörper aus einem anderen Ausführungsbeispiel oder ein Teil einer Rippenstruktur aus einem Ausführungsbeispiel mit den Merkmalen eines der Schutzansprüche mit einem anderen Teil einer Rippenstruktur eines weiteren Ausführungsbeispiels.

Bei einer erfindungsgemäßen Anschlusskupplung wird somit vorgeschlagen, an einem Schlauchnippel 3 eine Rippenstruktur 4 auszubilden, die wenigstens eine erste Rippe 5 aufweist, wobei die wenigstens erste Rippe 5 sich von einem Rippenanfang 6 bis zu einem zu diesem axial beabstandeten Rippenende 7 kontinuierlich erstreckt und sich über einen Umfangsabschnitt von mehr als 180°, vorzugsweise mehr als 270°, besonders bevorzugt mehr als 360° oder wenigstens einmal, um den Schlauchnippel 3 windet.

### Bezugszeichenliste

- 1: Anschlusskupplung
- 2: Anschlussstück
- 3: Schlauchnippel
- 4: Rippenstruktur
- 5: (erste) Rippe
- 6: Rippenanfang
- 7: Rippenende
- 8: Umfangsrichtung
- 9: Axialrichtung
- 10: Längsmittelachse
- 11: Gewindegang
- 12: Gewindenut
- 13: Gewinde
- 14: Auslenkung
- 15: Rippenhöhe
- 16: Anformung
- 17: (zweite) Rippe
- 18: Kreuzungspunkt
- 19: Zwickel
- 20: (weitere) Rippe
- 21: Grundkörper
- 22: (erster) Axialabschnitt
- 23: (zweiter) Axialabschnitt
- 24: Einhüllende
- 25: (dritter) Axialabschnitt
- 26: Rippenbreite
- 27: Abstand
- 28: (weiterer) Axialabschnitt
- 29: Rippenabschnitt
- 30: Rippenabschnitt
- 31: Aufsteckhilfe

## Patentansprüche

1. Anschlusskupplung (1) für einen Schlauch, mit einem Schlauchnippel (3), an welchem eine Rippenstruktur (4) mit wenigstens einer ersten Rippe (5) ausgebildet ist, **dadurch gekennzeichnet, dass** die wenigstens eine erste Rippe (5) den Schlauchnippel (3) über mehr als 180° umlaufend, vorzugsweise über mehr als 270° umlaufend, besonders bevorzugt über mehr als 360° umlaufend oder wenigstens einmal umlaufend, ausgebildet ist und dass ein Rippenanfang (6) der wenigstens einen ersten Rippe (5) von einem Rippenende (7) der wenigstens einen ersten Rippe (5) axial beabstandet ist.

2. Anschlusskupplung (1) nach Anspruch 1, **dadurch gekennzeichnet, dass** die wenigstens eine erste Rippe (5) zumindest abschnittsweise schräg zu einer Umfangsrichtung (8) und/oder schräg zu einer durch die Rippe (5) verlaufenden Axialrichtung (9) verläuft.

3. Anschlusskupplung (1) nach einem der vorangegangenen Ansprüche, **dadurch gekennzeichnet, dass** die wenigstens eine erste Rippe (5) wenigstens einen Gewindegang (11) bildet.

4. Anschlusskupplung nach einem der vorangegangenen Ansprüche, **dadurch gekennzeichnet, dass** die Rippenstruktur (4) wenigstens zwei Gewindegänge (11) hat, insbesondere ein mehrgängiges Gewinde (13) aufweist.

5. Anschlusskupplung (1) nach einem der vorangegangenen Ansprüche, **dadurch gekennzeichnet, dass** die Rippenstruktur (4) wenigstens eine zweite Rippe (17) hat, welche die wenigstens eine erste Rippe (5) kreuzt, insbesondere wobei die wenigstens eine zweite Rippe (17) entlang einer Umfangsrichtung (8) eines Grundkörpers (21) oder schräg zu einer Umfangsrichtung (8) eines Grundkörpers (21) verläuft.

6. Anschlusskupplung (1) nach einem der vorangegangenen Ansprüche, **dadurch gekennzeichnet, dass** die Rippenstruktur (4) wenigstens eine weitere Rippe (20) hat, welche einen gegenüber der wenigstens einen ersten Rippe (5) gegenläufigen Umlauf aufweist.

7. Anschlusskupplung (1) nach dem Oberbegriff von Anspruch 1, insbesondere nach Anspruch 1, wobei die Rippenstruktur (4) an einem Grundkörper (21) ausgebildet ist, **dadurch gekennzeichnet, dass** der Grundkörper (21) in einem ersten Axialabschnitt (22)der Rippenstruktur (4) einen größeren Außenumfang aufweist als in einem zweiten Axialabschnitt (23) der Rippenstruktur (4).

8. Anschlusskupplung (1) nach einem der vorangegangenen Ansprüche, **dadurch gekennzeichnet, dass** der Grundkörper (21) in einem dritten Axialabschnitt (25) der Rippenstruktur (4) einen kleineren Außenumfang aufweist als in dem ersten Axialabschnitt (23), wobei der erste Axialabschnitt (22) zwischen dem zweiten Axialabschnitt (23) und dem dritten Axialabschnitt (25) angeordnet ist.

9. Anschlusskupplung (1) nach einem der vorangegangenen Ansprüche, **dadurch gekennzeichnet, dass** der Grundkörper (21) verjüngend, insbesondere konusförmig, oder bauchig, insbesondere doppelkonusförmig, ausgebildet ist.

10. Anschlusskupplung (1) nach einem der vorangegangenen Ansprüche, **dadurch gekennzeichnet, dass** eine Rippenhöhe (15) entlang der wenigstens einen ersten Rippe (5), insbesondere über die Rippenstruktur (4), konstant ist.

11. Anschlusskupplung (1) nach dem Oberbegriff von Anspruch 7, insbesondere nach einem der vorangehenden Ansprüche, **dadurch gekennzeichnet, dass** die Rippenstruktur (4) eine Einhüllende (24) beschreibt und dass ein Abstand zwischen dem Grundkörper (21) und der Einhüllenden (24) axial variiert.

12. Anschlusskupplung (1) nach einem der vorangegangenen Ansprüche, **dadurch gekennzeichnet, dass** die Einhüllende (24) den Grundkörper (21) in einem weiteren Axialabschnitt (28) schneidet.

13. Anschlusskupplung (1) nach einem der vorangegangenen Ansprüche, **dadurch gekennzeichnet, dass** die Einhüllende (24) ein Zylinder ist.

14. Anschlusskupplung (1) nach einem der vorangegangenen Ansprüche, **dadurch gekennzeichnet, dass** die wenigstens eine erste Rippe (5) in wenigstens einem Rippenabschnitt (29) einen Verlauf mit einer axialen Auslenkung aufweist.

15. Anschlusskupplung (1) nach einem der vorangegangenen Ansprüche, **dadurch gekennzeichnet, dass** die wenigstens eine erste Rippe (5) in wenigstens einem Rippenabschnitt (29), insbesondere beabstandet zum Rippenanfang (29) und/oder zum Rippenende (7), ein Maximum einer Rippenhöhe (15) annimmt, insbesondere sodass eine radiale Anformung (16) gebildet ist.

16. Anschlusskupplung (1) nach einem der vorangegangenen Ansprüche, **dadurch gekennzeichnet, dass** an einem Axialende eine vorzugsweise konische Aufsteckhilfe (31) ausgebildet ist, insbesondere wobei sich die Rippenstruktur (4) axial in die Aufsteckhilfe (31) erstreckt oder wobei die Aufsteckhilfe (31) rippenfrei ausgebildet ist.

17. Anschlusskupplung (1) nach einem der vorangegangenen Ansprüche, **dadurch gekennzeichnet, dass** die oder eine Aufsteckhilfe (31) einen gegenüber dem oder einem die Rippenstruktur (4) tragenden Grundkörper (21) einen vergrößerten Außenumfang aufweist.

18. Anschlusskupplung (1) nach einem der vorangegangenen Ansprüche, **dadurch gekennzeichnet, dass** der Schlauchnippel (3), insbesondere die gesamte Anschlusskupplung (1), aus einem Kunststoffmaterial, insbesondere im Spritzgussverfahren, hergestellt ist.
